# FASCICULE DE BREVET EUROPEEN

(11) **EP 1 751 445 B1**
(45) Date de publication et mention de la délivrance du brevet: **17.09.2008**
(21) Numéro de dépôt: 05771008.9
(22) Date de dépôt: 11.05.2005
(51) Int. Cl.: F16D 43/24

(54) **COUPLEUR ENTRE UN ARBRE MOTEUR DE SORTIE ROTATIF D'UN DISPOSITIF DE COUPE ET UN ORGANE DE COUPE ROTATIF ET DISPOSITIF DE COUPE EQUIPE D'UN TEL COUPLEUR**
KUPPLUNG ZWISCHEN EINER ROTATIONSAUSGANGSANTRIEBSWELLE FÜR EIN SCHNEIDGERÄT, ROTATIONSQUERSCHNEIDER UND SCHNEIDVORRICHTUNG MIT DIESER KUPPLUNG
CLUTCH BETWEEN A ROTARY OUTPUT DRIVE SHAFT FOR A CUTTING DEVICE, A ROTARY CUTTER AND CUTTING DEVICE PROVIDED WITH SAID CLUTCH

(30) Priorité: 14.05.2004 FR 0405269
(43) Date de publication de la demande: 14.02.2007
(73) Titulaire: Chabrut, Michel, F-17170 Laronde (FR)
(72) Inventeur: Chabrut, Michel, F-17170 Laronde (FR)
(74) Mandataire: Laget, Jean-Loup
(86) Numéro de dépôt international: PCT/FR2005/001176
(87) Numéro de publication internationale: WO 2005/116475

(56) Documents cités:
- DE-C- 660 942
- FR-A- 1 222 861
- FR-A- 2 829 902
- US-A- 3 810 533

## Description

La présente invention concerne un coupleur entre l'arbre moteur de sortie rotatif d'un dispositif de coupe, tel qu'une débroussailleuse, et un organe de coupe rotatif, tel qu'une lame, ainsi qu'un dispositif de coupe équipé d'un tel coupleur.

Les dispositifs de coupe, tels que les dispositifs portables à coupe rotative, en particulier les débroussailleuses, sont particulièrement dangereux lorsqu'ils sont équipés d'organe de coupe rigide, tel que lame, disque ou similaire. En effet, lorsque le couple transmis par l'élément moteur de ladite débroussailleuse à l'organe de coupe devient inférieur au couple résistant appliqué à l'organe de coupe, en particulier lors de la rencontre avec un obstacle tel qu'une pierre, il se produit immédiatement une réaction violente de l'ensemble de la débroussailleuse. Cette réaction peut, si l'opérateur ne se méfie pas, blesser ce dernier. Cette réaction peut se traduire par des déplacements incontrôlés et brutaux de la débroussailleuse, par la casse de l'organe de coupe, ou par la casse de tout ou partie d'éléments moteurs inaptes à réagir à un arrêt brutal de la rotation de l'organe de coupe.

Pour résoudre ce problème, il a été imaginé d'incorporer, entre arbre moteur et organe de coupe, un limiteur de couple. Pendant longtemps, ces limiteurs de couple ont été conçus à partir de billes chargées par ressort, ces billes venant en contact de pression contre un chemin de roulement approprié. Dans de tels dispositifs, les inconvénients observés sont une usure rapide des billes, un matage du chemin de roulement et globalement, une faible durée de vie du limiteur de couple. Par ailleurs, il s'avère que le réglage du couple est difficile. Enfin, on constate une mauvaise dissipation de la chaleur.

D'autres limiteurs de couples, utilisant les actions de deux ressorts sont connus. C'est le cas des brevets FR 1222861 et US 3810533 qui décrivent tous deux un dispositif limiteur de couple, adapté à une machine comportant un rotor, entraîné en rotation par un moteur, et un engin de coupe, entraîné par un stator, ce dispositif permettant de limiter le couple transmis au stator lors de vitesses élevées de rotation du rotor. Dans ces documents, l'entraînement du stator est assuré par des patins de friction montés solidaires du rotor, ce qui implique que lesdits patins sont constamment soumis à la force centrifuge induite par la rotation du rotor. Ainsi, lors d'un arrêt brutal du stator, lorsque l'engin de coupe rencontre un obstacle par exemple, les patins continuent à s'appliquer sur le stator avec une pression de contact très importante au risque de poursuivre l'entraînement du stator. Dans ce dispositif, la force centrifuge ne s'annule pas lors de l'arrêt du stator, il peut en résulter un échauffement important voire l'endommagement de la machine dans laquelle est monté un tel dispositif.

Plus récemment, et en particulier dans la demande de brevet français FR-A-2.829.902, il a été proposé un coupleur dont la conception permet d'améliorer l'évacuation de la chaleur et d'obtenir une absence de choc dans le fonctionnement du coupleur, en particulier du fait de l'obtention du couple à transmettre par l'effort radial entre stator et rotor. Dans ce coupleur, le stator porte les patins réalisés sous forme de doigts pivotants chargés par ressort pour venir s'appliquer contre la piste de friction ménagée au niveau du rotor. La mise en rotation du stator par l'intermédiaire de ses patins maintenus en contact d'appui permanent contre la piste de friction du rotor génère une force centrifuge appliquée aux patins. Cette force centrifuge s'ajoute à la force du ressort pour obtenir un entraînement à vitesse égale entre stator et rotor et s'annule sous l'action d'ùn blocage accidentel du stator pour neutraliser momentanément l'entraînement entre rotor et stator par glissement des patins sur la surface de la piste de friction du rotor. Ce coupleur présente un grand nombre d'avantages par rapport aux systèmes développés jusqu'à présent. Il permet en effet de limiter l'usure des pièces et de minimiser l'échauffement. Ce coupleur permet notamment, lors de la phase de démarrage de l'entraînement en rotation du moteur, d'obtenir une réactivité importante du stator et en particulier un entraînement rapide à une vitesse de rotation élevée du stator grâce à la présence d'un ressort de compression qui exerce, de manière permanente, un effort radial sur le patin et tend à le maintenir en appui constant sur la piste de friction du rotor.

Pour que cette phase de démarrage et les phases de fonctionnement ultérieures se déroulent de manière optimale, il est nécessaire que la surface de friction, entre patins et piste de friction du rotor, soit de dimension relativement importante de manière à éviter tout patinage. Dans la version décrite dans la demande de brevet français précitée, cette surface demeure inchangée, quelles que soient les phases de fonctionnement du stator. Ainsi, que le stator soit immobilisé en raison de la présence d'un obstacle ou non, la surface de friction entre patins et rotor demeure identique. De ce fait, il peut à nouveau être observé un échauffement important et une usure plus rapide du patin lors des phases de patinage correspondant aux phases de ralentissement ou de blocage du stator.

De plus tous les dispositifs décrits ci-dessus génèrent d'importantes vibrations car, dans chacun des cas précédents, l'axe portant les patins et autorisant leur mouvement pour permettre l'entraînement du stator est fixe. La transmission des vibrations à travers cet axe est donc très peu amortie. En conséquence, l'utilisateur d'une machine équipée d'un tel dispositif subit d'importantes vibrations pouvant entraîner des troubles musculo-squelettiques dans le système bras-main ou au niveau de la colonne vertébrale.

On est donc à la recherche aujourd'hui de solutions qui permettraient au coupleur de disposer, au niveau de la phase de démarrage, des mêmes avantages que ceux mentionnés ci-dessus tout en réduisant les problèmes d'échauffement pendant les phases de patinage et les problèmes de vibrations lors du fonctionnement.

Un but de la présente invention est donc de proposer un coupleur dont la conception permet de faire varier à volonté la surface de friction entre patin de friction et piste de friction du rotor de manière à minimiser l'échauffement à l'état ralenti ou immobilisé du stator sans nuire au temps de ré-enclenchement nécessaire au passage de la position débrayée à la position embrayée dudit patin.

Un autre but de la présente invention est de proposer un coupleur dont la conception permet de faire varier à volonté le temps de ré-enclenchement dudit coupleur correspondant au passage de la position débrayée à la position embrayée de ce dernier.

Un autre but de la présente invention est de proposer un coupleur dont la conception permet de disposer d'un temps de déclenchement réenclenchement de l'ordre de 2 secondes, ce temps correspondant aux étapes de dégagement de la lame de coupe de l'obstacle et de remise en contact d'une lame de coupe entraînée en rotation avec l'objet à couper.

Un autre but de l'invention est de proposer un coupleur dont la conception permet de limiter sensiblement les vibrations subies par l'utilisateur d'une machine équipée dudit dispositif.

A cet effet, l'invention a pour objet un coupleur entre l'arbre moteur de sortie rotatif d'un dispositif de coupe, tel qu'une débroussailleuse et un organe de coupe rotatif, tel qu'une lame, ledit coupleur étant constitué d'une part, d'un rotor solidarisable, à l'arbre moteur se présentant au moins sous forme d'un corps cylindrique; tel qu'une cloche, dont au moins une partie des parois internes forme une piste de friction, d'autre part d'un stator apte à porter l'organe de coupe, ce stator pouvant être entraîné par le rotor par l'intermédiaire de patins de friction portés par ledit stator, chaque patin, monté sur la platine porte-patins du stator libre à pivotement autour d'un axe parallèle à l'axe de rotation du stator, étant soumis de façon permanente à l'action d'au moins un ressort de compression à effort généralement radial pour s'appliquer sur la piste de friction du rotor et entraîner en rotation le stator, ce patin pivotant étant en outre monté avec jeu sur ladite platine pour pouvoir se déplacer angulairement, en particulier par coulissement, entre deux positions extrêmes, l'une d'embrayage dans laquelle la surface de friction entre patin et corps cylindrique est maximale, l'autre de débrayage dans laquelle la surface de friction entre patin et corps cylindrique est minimale, et facilite un glissement du patin sur la surface de la piste de friction du rotor, où le passage de la position embrayée à la position débrayée s'effectue, lors d'un ralentissement du stator, par déplacement relatif du patin et du stator en comprimant un second ressort, ce second ressort tendant à ramener le patin depuis la position angulaire débrayée vers la position angulaire embrayée de manière à permettre, en un temps court, un ré-enclenchement autorisant un fonctionnement optimal dudit coupleur. L'objet de l'invention est défini par les revendications.

Grâce à la présence de deux ressorts agissant l'un radialement, l'autre suivant une direction proche d'une direction tangentielle au stator, il est possible de maîtriser parfaitement le temps de déclenchement et de ré-enclenchement du coupleur et de pouvoir effectuer ces opérations en un temps inférieur à 3 secondes pour permettre à ces opérations de s'effectuer en temps masqué. En effet, en agissant sur la raideur du second ressort de compression, à action suivant une direction essentiellement tangentielle, il est possible de faire varier le temps de ré-enclenchement correspondant au temps nécessaire au passage du patin d'une position débrayée correspondant à une position dans laquelle la surface de contact entre le patin et la piste de friction du rotor est minimale à une position embrayée qui correspond à une surface de contact maximale entre ces deux mêmes éléments. De la même manière, plus on rapproche les premier et second ressorts l'un de l'autre, plus on réduit le temps de réenclenchement du fait de la forme du patin. On peut ainsi agir sur les caractéristiques et la position relative des premier et second ressorts pour faire varier à volonté le temps de ré-enclenchement et par suite le temps de déclenchement.

L'invention a également pour objet un dispositif de coupe, en particulier portable, à coupe rotative, tel qu'une débroussailleuse, ce dispositif comportant, entre un arbre moteur de sortie rotatif et un organe de coupe, un coupleur du type précité.

L'invention sera bien comprise à la lecture de la description suivante d'exemples de réalisation, en référence aux dessins annexés dans lesquels :
la figure 1 représente une vue partielle schématique en coupe d'un coupleur conforme à l'invention ;
la figure 2 représente une vue de dessus du stator équipant un tel coupleur ;
les figures 3 et 4 représentent une vue de détail du patin en position embrayée (figure 3) et en position débrayée (figure 4) ;

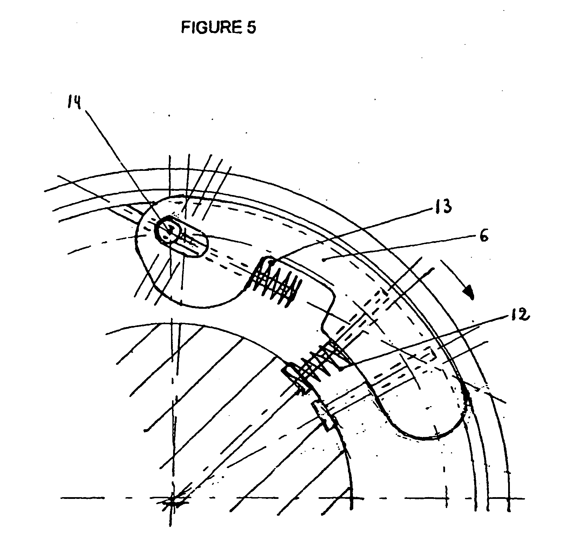

la figure 5 représente une vue de détail du patin dans une autre position relative des ressorts pour accroître le temps de ré-enclenchement ;

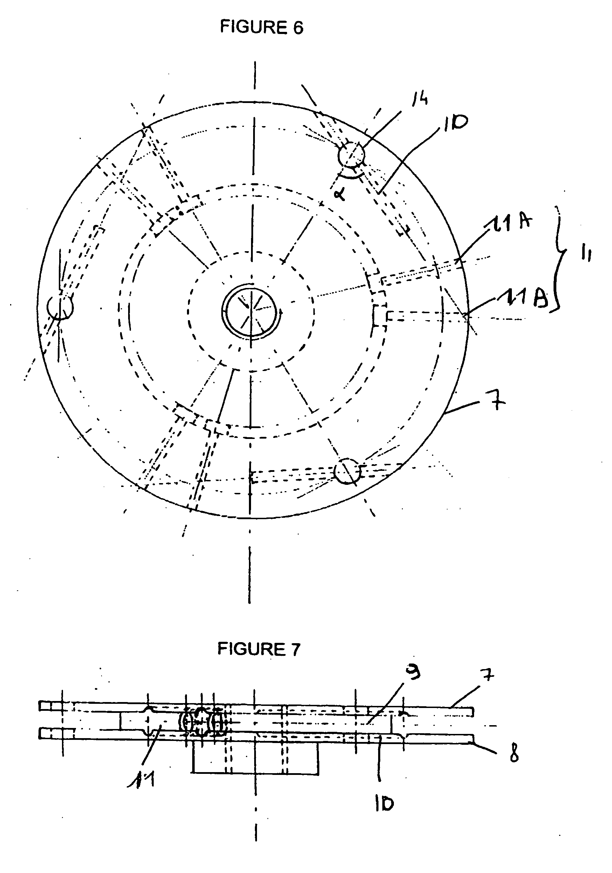

la figure 6 représente une vue partielle en coupe de la platine porte-patins du stator seule et
la figure 7 représente une vue partielle en coupe de la platine porte-patins, les patins ayant été enlevés.

Comme mentionné ci-dessus, le coupleur 1, objet de l'invention, est plus particulièrement destiné à coupler l'arbre moteur de sortie rotatif d'un dispositif de coupe, en particulier un dispositif de coupe portable à coupe rotative, tel qu'une débroussailleuse, et un organe 2 de coupe rotatif, tel qu'une lame, un disque ou bien encore une plaque rotative de forme quelconque.

Les débroussailleuses connues à ce jour comportent ainsi, de manière en soi connue, un corps tubulaire, ou canne, muni d'un arbre moteur rotatif d'entraînement d'un organe de coupe. Cette canne peut affecter un grand nombre de formes. Elle est généralement munie, au voisinage de l'une de ses extrémités, d'un guidon ou d'une poignée pour faciliter sa préhension par l'opérateur. L'arbre moteur est quant à lui généralement accouplé à un moteur thermique ou électrique et comporte, à son extrémité de sortie, un renvoi d'angle constitué de deux pignons spiraux hélicoïdaux. Le second pignon est prolongé d'un arbre qui peut être relié à son extrémité directement au coupleur. Ce coupleur peut ainsi se loger dans la tête de la débroussailleuse, cette tête affectant sensiblement la forme d'une cloche solidaire de l'extrémité de la canne opposée à celle munie de l'organe de préhension. Le détail de cet arbre moteur ne sera pas fourni car il est bien connu à ceux versés dans cet art. Ce coupleur peut également se loger entre l'embrayage moteur et l'arbre de transmission.

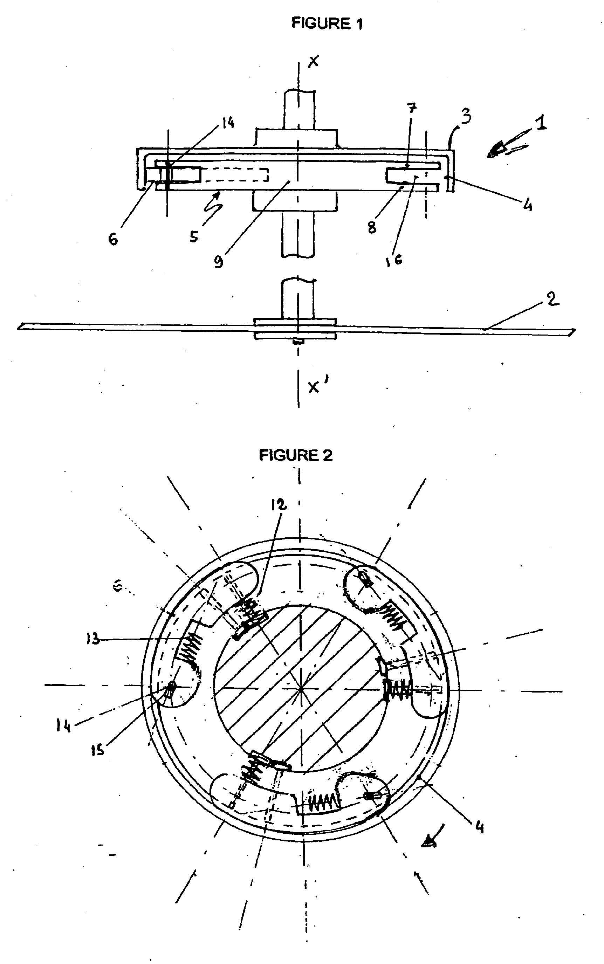

Le coupleur 1, destiné à être positionné entre l'arbre moteur de sortie rotatif du dispositif de coupe et l'organe 2 de coupe rotatif rigide, est constitué quant à lui d'une part, d'un rotor 3 solidarisable à l'arbre moteur, d'autre part d'un stator 5 apte à porter l'organe 2 de coupe. Le rotor 3 se présente au moins sous forme d'un corps cylindrique, tel qu'une cloche, qui peut affecter une forme quelconque. Au moins une partie des parois internes forme une piste 4 de friction. Cette piste 4 de friction est une piste circulaire contre laquelle les patins équipant le stator sont maintenus en contact d'appui permanent. En effet, le stator 5, apte à porter l'organe 2 de coupe, peut être entraîné par le rotor 3 par l'intermédiaire de patins 6 de friction portés par ledit stator 5. Il est à noter qu'on entend par rotor, un élément menant moteur rotatif et par stator un élément mené rotatif, le rotor et le stator étant entraînés en rotation autour d'un même axe représenté par l'axe XX' dans la figure 1.

Les patins 6 de friction sont montés sur la platine porte-patins du stator 5 libres à pivotement autour d'un axe parallèle à l'axe de rotation du stator 5. Il sont également soumis, de façon permanente, à l'action d'au moins un premier ressort 12 de compression pour s'appliquer sur la piste 4 de friction du rotor 3 et entraîner en rotation le stator 5. Ainsi, la mise en rotation du stator génère une force centrifuge appliquée aux patins 6. Cette force centrifuge s'ajoute à la force des ressorts 12 pour obtenir un entraînement à vitesse égale entre stator et rotor et s'annule sous l'action d'un blocage accidentel du stator pour neutraliser momentanément l'entraînement entre rotor et stator par glissement des patins sur la surface de la piste 4 de friction du rotor. Chaque patin 6 pivotant est en outre monté avec jeu sur ladite platine. Ce patin 6 est ainsi, à l'état ralenti ou immobilisé du stator animé d'un déplacement relatif par rapport au stator et déplaçable angulairement, en particulier par coulissement, par le rotor dans une direction provoquant une réduction de la surface de friction entre patin et corps cylindrique. Ainsi, chaque patin passe d'une position embrayée, dans laquelle la surface de friction entre patins 6 et piste de friction du corps cylindrique est importante, à une position débrayée, dans laquelle la surface de friction entre patins 6 et corps cylindrique est réduite et facilite un glissement du patin 6 sur la surface de la piste 4 de friction. Cette position débrayée permet ainsi la poursuite du déplacement en rotation du rotor alors que le stator est ralenti ou immobilisé du fait de la rencontre de l'organe 2 de coupe avec un obstacle. Le passage de la position embrayée à la position débrayée du patin s'effectue lors d'un ralentissement du stator par déplacement relatif du patin et du stator en comprimant un second ressort 13. Ce second ressort 13 tend à rappeler le patin 6 depuis la position angulaire débrayée vers la position angulaire embrayée. Ainsi, le patin est soumis en permanence à l'action de deux ressorts, un premier ressort qui tend à ramener, généralement par exercice d'une force radiale, le patin contre la piste 4 de friction du rotor, un second ressort 13 qui tend à ramener le patin depuis la position angulaire débrayée vers la position angulaire embrayée. Le premier ressort permet de faciliter, au moment du démarrage, une adhérence immédiate du patin à la piste 4 de friction. Le second ressort permet d'adapter le temps de réenclenchement correspondant au temps nécessaire au passage de la position débrayée à la position embrayée.

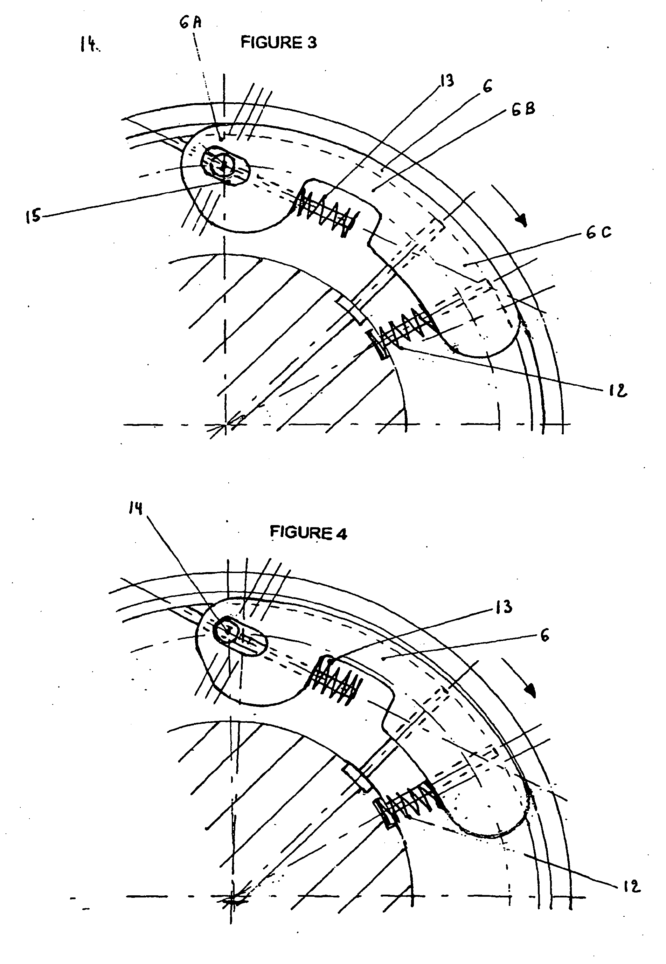

Chaque patin 6 monté avec jeu sur la platine porte-patins est agencé pour, lors du passage de la position embrayée à la position débrayée ou inversement, se déplacer, dans un plan perpendiculaire à l'axe de rotation du stator 5, suivant une direction formant avec le rayon du stator 5 passant par l'axe 14 de pivotement dudit patin 6 un angle α compris dans la plage [60 - 85]°. Ce déplacement du patin est plus particulièrement représenté aux figures 3 et 4 qui illustrent le passage d'une position embrayée à une position débrayée dudit patin. L'axe 14 pivot et les paliers 15 de réception de l'axe 14 pivot autorisant un montage à pivotement libre du patin 6 sur la platine porte-patins sont portés l'un par le patin 6, l'autre par la platine support de patins et présentent des formes non complémentaires pour permettre un déplacement relatif angulaire entre patins 6 et platine support de patins sous l'action du rotor à l'état ralenti ou immobilisé du stator. Ainsi, les paliers 15 de l'axe 14 pivot affectent la forme de lumière oblongue ménagée dans le patin 6. Ces lumières oblongues sont traversées par un axe monté de manière stationnaire sur la platine porte-patins. Cet axe parallèle à l'axe de rotation du stator 5 constitue l'axe 14 pivot dudit patin 6. L'axe longitudinal de chaque lumière, qui constitue un chemin de guidage, forme avec le rayon du stator passant par l'axe 14 pivot du patin 6 correspondant, un angle compris dans la plage [60-85°].

Pour permettre de faire varier à volonté le temps de ré-enclenchement en agissant sur la position relative des ressorts 12 et 13 mentionnés ci-dessus, la platine porte-patins est munie d'une pluralité de logements 11A, 11B de réception d'un même ressort 12 pour modifier à volonté la position relative, en particulier la distance, entre les ressorts 12, 13 agissant sur un même patin 6. Dans les exemples représentés, les premier et second ressorts 12, 13 agissant sur un même patin sont des ressorts de compression, de préférence hélicoïdaux, dont les axes se coupent au point d'appui du patin sur la piste de friction de la corps cylindrique en position débrayée dudit patin 6.

Dans le détail, le stator est constitué d'un axe portant au voisinage d'une extrémité, une platine porte-patins et, à l'autre extrémité, une platine porte-organe de coupe. Un palier à billes est généralement inséré entre lesdites platines. Cette platine porte-patins est constituée de deux flasques 7, 8 circulaires reliés entre eux par un moyeu 9 pour délimiter une gorge 16 circulaire périphérique interne à l'intérieur de laquelle sont logés à la fois les patins 6 affectant la forme de doigts pivotant autour d'un axe parallèle à l'axe du moyeu et les ressorts 12, 13. Les flasques 7, 8 sont munis, pour chaque patin 6, d'au moins deux séries de rainures 10, 11 en regard servant chacune à la délimitation de chemin de guidage d'un ressort. La première série de rainures 11 s'étendant radialement entre le fond de la gorge 16 et la tranche des flasques 7, 8 sert à la réception du premier ressort 12 de compression à effort radial disposé entre le fond de gorge 16 et la surface du patin 6 opposée à celle destinée à venir en contact avec la surface de friction de la piste 4 du rotor 3. La seconde série de rainures 10, destinée à la réception du second ressort 13 agissant sur la position angulaire du patin 6, prend naissance sur la tranche des flasques 7, 8 et s'étend en direction du fond de gorge 16 en passant par l'axe 14 de pivotement du patin 6. Ces rainures 10 de la seconde série de rainures forment, avec le rayon des flasques 7, 8 passant par l'axe pivot dudit pivot 14, un angle α de préférence compris dans la plage [60 - 85]°.

Dans les exemples représentés, la platine porte-patins est équipée d'au moins trois patins 6 et six ressorts 12, 13 dont trois occupent les logements 11A ou 11B. Chaque patin 6 affecte la forme d'un doigt courbe muni, à chacune de ses extrémités, d'un renflement représenté en 6A et 6C aux figures. L'un 6C des renflements est soumis à l'action du premier ressort 12 de compression disposé entre la platine porte-patins et la surface du doigt opposée à la surface de contact avec la piste de friction. Ainsi, sous l'action de ce ressort 12 de compression à effet radial, le patin est maintenu en contact de friction permanent avec la piste de friction.

L'autre renflement 6A comporte quant à lui des lumières traversées par l'axe pivot 14. Le second ressort 13 de compression, permettant de rappeler le patin en position embrayée, s'étend entre ce renflement 6A et la platine porte-patins. La zone d'appui du ressort 13 sur le renflement 6A est réalisée sous forme d'une portion circulaire pour faciliter l'interchangeabilité du ressort 12. Ce second ressort 13 se comprime lors d'un déplacement angulaire dudit patin, correspondant à son passage de la position débrayée à la position embrayée. La lumière servant à la réception de l'axe 14 pivot du patin et les rainures de logement du second ressort 13 dans les flasques des platines forme un ensemble aligné qui constitue, avec la tangente au rotor prise au droit de l'axe pivot dudit patin, un angle de préférence voisin de 20°_{.}

Entre les renflements 6A et 6C du patin s'étend un évidement 6B. Cet évidement 6B sert au logement du second ressort 13.

Le fonctionnement d'un tel coupleur est le suivant. Au démarrage, les patins de friction portés par le stator sont soumis de façon permanente à l'action des premiers ressorts 12 de compression pour s'appliquer sur la piste 4 de friction du rotor et entraîner en rotation le stator. Le patin occupe donc une position conforme à celle représentée à la figure 3 dans laquelle la surface de friction entre patin et piste de friction est maximale. La mise en rotation du stator génère une force centrifuge appliquée au patin. Cette force centrifuge s'ajoute à la force du premier ressort 12 pour obtenir un entraînement à vitesse égale entre stator et rotor. Lorsque l'organe de coupe rencontre un obstacle, l'organe de coupe bute contre ledit obstacle donc la vitesse de rotation chute et la force centrifuge tend à se réduire, voire à s'annuler. Par conséquent, l'adhérence entre patins du stator et piste de friction du rotor est telle que le couple résistant appliqué à l'organe de coupe devient supérieur au couple nominal pré-établi en fonction de la dimension et de la masse du patin de telle sorte que l'organe de coupe s'arrête. La platine porte-patins liée à l'outil de coupe s'arrête également. Le corps cylindrique de friction, solidaire de l'arbre moteur, continue à tourner et l'énergie cinétique provoque un déplacement angulaire des patins lors de la poursuite de la rotation du rotor. Ce déplacement relatif du patin par rapport au stator provoque une compression du second ressort 13 de compression. Au cours de ce déplacement, le patin qui coulisse sur une longueur correspondant au plus à la longueur de la lumière oblongue s'écarte en décollant de la piste de friction du corps cylindrique du rotor provoquant ainsi une réduction de la surface de friction entre patin et piste de friction. La surface de contact est réduite sensiblement à zéro et correspond à une ligne de contact. De ce fait, le rotor peut continuer à tourner et glisse sur les patins sans générer d'échauffement de chaleur important ni d'usure importante. Lorsque l'outil de coupe solidaire de l'arbre de transmission est dégagé de l'obstacle et que le couple résistant appliqué à l'organe de coupe devient inférieur au couple moteur, le patin est ramené, par l'action du ressort 13, dans une position angulaire correspondant à une position dans laquelle la surface de friction entre piste de friction et patin est maximale. Ce patin est maintenu en contact de pression permanent contre la piste de friction par l'intermédiaire du premier ressort 12 pour permettre au rotor d'entraîner le stator en mode embrayage au redémarrage. La force centrifuge vient s'ajouter à l'effet desdits ressorts pour accentuer le plaquage des patins contre la piste de friction du rotor. Comme mentionné ci-dessus, en fonction des caractéristiques des deux ressorts et de leur position relative, il est possible de faire varier les temps de déclenchement et de ré-enclenchement d'un tel coupleur.

## Revendications

1. Coupleur (1) entre l'arbre moteur de sortie rotatif d'un dispositif de coupe, tel qu'une débrousailleuse le et un organe (2) de coupe rotatif, tel qu'une lame, ledit coupleur (1) étant constitué d'une part, d'un rotor (3) solidarisable à l'arbre moteur se présentant au moins sous forme d'un corps cylindrique, tel qu'une cloche, dont au moins une partie des parois internes forme une piste (4) de friction, d'autre part d'un stator (5) apte à porter l'organe (2) de coupe, ce stator (5) pouvant être entrainé par le rotor (3) par l'intermédiaire de patins (6) de friction portés par ledit stator (5), chaque patin (6), monté sur la platine porte-patins du stator (5) libre à pivotement autour d'un axe parallèle à l'axe de rotation du stator (5), étant soumis de façon permanente à l'action d'au moins un ressort (12) de compression à effort généralement radial pour s'appliquer sur la piste (4) de friction du rotor (3) et entraîner en rotation le stator (5), ce patin (6) pivotant étant en outre monté avec jeu sur ladite platine pour pouvoir se déplacer angulairement, en particulier par coulissement, entre deux positions extrêmes, l'une d'embrayage dans laquelle la surface de friction entre patin (6) et corps cylindrique est maximale, l'autre de débrayage dans laquelle la surface de friction entre patin (6) et cloche est minimale, et facilite un glissement du patin (8) sur la surface de la piste (4) de friction du rotor (3), et lors d'un ralentissement ou d'un arrêt du stator (5), le patin (6) et le stator (5) sont, sous l'action du rotor (3), animés d'un déplacement relatif en vue du passage de la position embrayée à la position débrayée, ce déplacement provoquant la compression d'un second ressort (13), ce second ressort (13) tendant à ramener le patin (6) depuis la position angulaire débrayée vers la position angulaire embrayée,
**caractérisé en ce que** les ressorts (12,13) agissant sur un même patin sont des ressorts de compression, de préférence hélicoidaux, dont les axes se coupent au point d'appui du patin sur la piste de friction du corps cylindrique en position débrayée dudit patin (6).

2. Coupleur (1) selon la revendication 1,
**caractérisé en ce que** chaque patin (6) monté avec jeu sur la platine porte-patins est agencé pour, lors du passage de la position embrayée à la position débrayée ou inversement, se déplacer, dans un plan perpendiculaire à l'axe de rotation du stator (5), suivant une direction formant avec le rayon du stator (5) passant par l'axe (14) de pivotement dudit patin (6) un angle α compris dans la plage [60-85]°.

3. Coupleur (1) selon l'une des revendications 1 et 2,
**caractérisé en ce que** l'axe (14) pivot et les paliers (15) de réception de l'axe (14) pivot autorisent un montage à pivotement libre du patin (6) sur la platine porte-patins sont portés l'un par le patin (6), l'autre par la platine support de patins et présentent des formes non complémentaires pour permettre un déplacement relatif angulaire entre patins (6) et platine support de patins.

4. Coupleur (1) selon a revendication 3,
**caractérisé en ce** qui les paliers (15) de l'axe (14) pivot affectent la forme de lumière oblongue ménagée dans te patin (6), lesdites lumières oblongues étant traversées par un axe monté de manière stationnaire sur la platine porte-patins, cet axe parallèle à l'axe de rotation du stator (5) constituant l'axe (14) pivot dudit patin (6).

5. Coupleur (1) selon la revendication 4,
**caractérisé en ce que** l'axe longitudinal de chaque lumière qui constitue un chemin de guidage forme avec le rayon du stator passant par l'axe (14) pivot du patin (6) correspondant, un angle compris dans la plage [60-85°].

6. Coupleur selon l'une des revendications 1 à 5,
**caractérisé en ce que** la platine porte-patins est munie d'une pluralité de logements (11A, 11B) de réception d'un même ressort (12) pour modifier à volonté la position relative, en particulier la distance, entre les ressorts (12, 13) agissant sur un même patin (6) de manière à faire varier notamment le temps de réenclenchement correspondant au passage de la position débrayée à la position embrayée desdits patins (6).

7. Coupleur (1) selon l'une des revendications 1 à 6, **caractérisé en ce que** la platine porte-patins est constituée de deux flasques (7, 8) circulaires reliés entre eux par un moyeu (9) pour délimiter une gorge (16) circulaire périphérique interne à l'intérieur de laquelle sont logés à la fois les patins (6) affectant la forme de doigts pivotant autour d'un axe parallèle à l'axe du moyeu et les ressorts (12, 13).

8. Coupleur (1) selon la revendication 1,
**caractérisé en ce que** les flasques (7, 8) sont munis, pour chaque patin (6), d'au moins deux séries de rainures (10, 11) en regard servant chacune à la délimitation de chemin de guidage d'un ressort, la première série de rainures (11) s'étendant radialement entre le fond de la gorge (16) et la tranche des flasques (7, 8) et servant à la réception du ressort (12) de compression à effort radial disposé entre le fond de gorge (16) et la surface du patin (6) opposée à celle destinée à venir en contact avec la surface de friction de la piste (4) du rotor (3), la seconde série de rainures (10), destinée à la réception du ressort (13) agissant sur la position angulaire du patin (6), prenant naissance sur la tranche des flasques (7, 8) et s'étendant en direction du fond de gorge (16) en passant par l'axe (14) de pivotement du patin (6), ces rainures (10) de la seconde série de rainures formant avec le rayon des flasques (7, 8) pansant par l'axe pivot dudit pivot (14), un angle α de préférence compris dans la plage [60-75]°.

9. Coupleur (1) selon l'une des revendications 1 à 8,
**caractérisé en ce que** a platine porte-patins est équipée d'au moins trois patins (6) et de six ressorts (12, 13), chaque patin (6) affectant la forme d'un doigt courbe muni à chacune de ses extrémités d'un renflement, l'évidement ménagé entre lesdits renflements servant à la réception de l'un des ressorts (6A, 6C).

10. Dispositif de coupe, en particulier portable, à coupe rotative, tel qu'une débrousailleuse, ce dispositif comportant, entre un arbre moteur de sortie rotatif et un organe de coupe, un coupleur,
**caractérisé en ce que** le coupleur est conforme à l'une des revendications 1 à 9.

## Claims

1. Coupler (1) between the rotary output drive shaft of a cutting device, such as a strimmer, and a rotary cutting unit (2) such as a blade, the said coupler (1) consisting firstly of a rotor (3) which can be rendered integral with the drive shaft, and is at least in the form of a cylindrical body, such as a bell, at least part of the inner walls of which forms a friction track (4), and secondly of a stator (5) which can support the cutting unit (2), this stator (5) being able to be driven by the rotor (3) by means of friction blocks (6) which are supported by the said stator (5), each block (6) which is fitted on the block-holder plate of the stator (5), and is free to pivot around an axis which is parallel to the axis of rotation of the stator (5), being subjected permanently to the action of at least one compression spring (12) with generally radial force, in order to be applied to the friction track (4) of the rotor (3) and to rotate the stator (5), this pivoting block (6) also being fitted with play on the said plate in order to be able to be displaced angularly, in particular by sliding, between two extreme positions, one of engagement, in which the friction surface between the block (6) and the cylindrical body is maximal, and the other of disengagement, in which the friction surface between the block (6) and the bell is minimal, and facilitates sliding of the block (6) on the surface of the friction track (4) of the rotor (3) and, during slowing down or stoppage of the stator (5), the block (6) and the stator (5) are driven under the action of the rotor (3) by relative displacement, for the purpose of passage from the engaged position to the disengaged position, this displacement giving rise to compression of a second spring (13), this second spring (13) tending to return the block (6) from the angular disengaged position to the angular engaged position, **characterised in that** the block-holder plate consists of two circular flanges (7, 8), which are connected to one another by a hub (9), in order to delimit an inner peripheral circular groove, inside which there are accommodated both the blocks (6) in the form of fingers which pivot around an axis which is parallel to the axis of the hub, and the springs (12, 13).

2. Coupler (1) according to claim 1, **characterised in that** each block (6) which is fitted with play on the block-holder plate is arranged such that, during the passage from the engaged position to the disengaged position or conversely, it is displaced in a direction perpendicular to the axis of rotation of the stator (5), according to a direction which forms an angle α within the range [60-85]° together with the radius of the stator (5) which passes via the pivoting shaft (14) of the said block (6).

3. Coupler (1) according to one of claims 1 and 2, **characterised in that** the pivoting shaft (14) and the bearings (15) for receipt of the pivoting shaft (14) which permit fitting with free pivoting of the block (6) on the block-holder plate, are supported, one of them by the block (6) and the other by the block support plate, and have non-complementary forms in order to permit relative angular displacement between the blocks (6) and the block support plate.

4. Coupler (1) according to claim 3, **characterised in that** the bearings (15) of the pivoting shaft (14) are in the form of an oblong aperture which is provided in the block (6), a shaft which is fitted in a stationary manner on the block-holder plate passing through the said oblong apertures, this shaft parallel to the axis of rotation of the stator (5) constituting the pivoting shaft (14) of the said block (6).

5. Coupler (1) according to claim 4, **characterised in that** the longitudinal axis of each aperture which constitutes a guide path forms an angle within the range [60-85°] together with the radius of the stator which passes via the pivoting shaft (14) of the corresponding block (6).

6. Coupler according to one of claims 1 to 5, **characterised in that** the block-holder plate is provided with a plurality of receptacles (11A, 11B) to receive a single spring (12), in order to modify as required the relative position, and in particular the distance, between the springs (12, 13), by acting on a single block (6) such as to vary in particular the recoupling time corresponding to the passage from the disengaged position to the engaged position of the said blocks (6).

7. Coupler (1) according to one of claims 1 to 6, **characterised in that** the springs (12, 13) which act on a single block are compression springs which are preferably helical, the axes of which intersect at the point of support of the block on the friction track of the cylindrical body, in the disengaged position of the said block (6).

8. Coupler (1) according to claim 1, **characterised in that** the flanges (7, 8) are provided, for each block (6), with at least two series of opposite grooves (10, 11), each of which is used to delimit a guide path for a spring, the first series of grooves (11) extending radially between the base of the groove (16) and the section of the flanges (7, 8), and being used to receive the compression spring (12) with radial force which is disposed between the base of the groove (16) and the surface of the block (6) opposite that which is designed to come into contact with the friction surface of the track (4) of the rotor (3), the second series of grooves (10), which is designed for receipt of the spring (13), acting on the angular position of the block (6), starting from the section of the flanges (7, 8), extending in the direction of the base of the groove (16), and passing via the pivoting shaft (14) of the block (6), these grooves (10) of the second series of grooves forming an angle α which is preferably within the range [60-75]°, together with the radius of the flanges (7, 8) which passes via the axis of pivoting of the said pivot (14).

9. Coupler (1) according to one of claims 1 to 8, **characterised in that** the block-holder plate is equipped with at least three blocks (6) and six springs (12, 13), each block (6) being in the form of a curved finger which is provided at each of its ends with an enlargement, the recess which is provided between the said enlargements being used to receive one of the springs (6A, 6C).

10. Cutting device, which in particular is portable and performs rotary cutting, such as a strimmer, this device comprising a coupler between a rotary output drive shaft and a cutting unit, **characterised in that** the coupler is in accordance with one of claims 1 to 9.

## Patentansprüche

1. Kupplung (1) zwischen der drehbaren Ausgangsantriebswelle eines Schneidgerätes, beispielsweise eines Freischneiders, und einem drehbaren Schneidelement (2), beispielsweise einem Messer, wobei die Kupplung (1) einerseits einen mit der Antriebswelle verbindbaren Rotor (3) umfasst, der mindestens in Form eines zylindrischen Körpers, beispielsweise einer Glocke, ausgebildet ist, von dem mindestens ein Teil der Innenwände eine Reibfläche (4) bildet, und andererseits einen Stator (5) umfasst, der das Schneidelement (2) zu tragen geeignet ist, wobei der Stator (5) über von dem Stator (5) getragene Reibschuhe (6) von dem Rotor (3) angetrieben werden kann, wobei jeder Reibschuh (6), der frei drehbeweglich um einen parallel zur Rotationsachse des Stators (5) stehenden Zapfen an dem Reibschuhhalter des Stators (5) befestigt ist, dauerhaft der Wirkung einer im wesentlichen eine Radialkraft bewirkenden Druckfeder (12) ausgesetzt ist, um sich an die Reibfläche (4) des Rotors (3) anzulegen und den Stator (5) mitdrehend anzutreiben, wobei der drehbewegliche Reibschuh (6) zudem mit einem Spiel an dem Reibschuhhalter befestigt ist, um sich winklig, insbesondere schiebend, zwischen zwei äußeren Positionen zu bewegen, einer Einkuppelposition, in der die Reibfläche zwischen Reibschuh (6) und zylindrischem Körper maximal ist, und einer Auskuppelposition, in der die Reibfläche zwischen Reibschuh (6) und Glocke minimal ist und ein Gleiten des Reibschuhs (6) auf der Reibfläche (4) des Rotors (3) ermöglicht, wobei bei einer Verlangsamung oder einem Stillstand des Stators (5) der Reibschuh (6) und der Stator (5) unter Wirkung des Rotors (3) in eine Bewegung relativ zum Übergang von der eingekuppelten Position in die ausgekuppelte Position versetzt werden, wobei die Bewegung das Zusammendrücken einer zweiten Feder (13) hervorruft, wobei die zweite Feder (13) den Reibschuh (6) aus der ausgekuppelten Winkelposition in die eingekuppelte Winkelposition zu bringen sucht, **dadurch gekennzeichnet, dass** der Reibschuhhalter zwei kreisförmige Flansche (7, 8) umfasst, die über eine Nabe (9) miteinander verbunden sind, um eine umlaufende kreisförmige Innenkehle (16) zu begrenzen, in der sowohl die Reibschuhe (6), die die Form von Fingern aufweisen, die um einen parallel zur Achse der Nabe verlaufenden Zapfen drehbeweglich sind, als auch die Federn (12, 13) aufgenommen sind.

2. Kupplung (1) nach Anspruch 1, **dadurch gekennzeichnet, dass** jeder Reibschuh (6), der mit einem Spiel an dem Reibschuhhalter befestigt ist, so ausgebildet ist, um sich bei dem Übergang von der eingekuppelten Position in die ausgekuppelte Position oder umgekehrt in einer senkrecht zur Rotationsachse des Stators (5) verlaufenden Ebene in eine Richtung zu bewegen, die mit dem durch den Drehzapfen (14) des Reibschuhs (6) verlaufenden Radius des Stators (5) einen Winkel α im Bereich von [60-85]° bildet.

3. Kupplung (1) nach einem der Ansprüche 1 und 2, **dadurch gekennzeichnet, dass** der Drehzapfen (14) und die Lager (15) zur Aufnahme des Drehzapfens (14), der eine frei drehbewegliche Befestigung des Reibschuhs (6) an dem Reibschuhhalter ermöglicht, von dem Reibschuh (6) beziehungsweise von dem Reibschuhhalter getragen werden und nicht komplementär geformt sind, um eine relative Winkelbewegung zwischen Reibschuhen (6) und Reibschuhhalter zu ermöglichen.

4. Kupplung (1) nach Anspruch 3, **dadurch gekennzeichnet, dass** die Lager (15) des Drehzapfens (14) die Form eines in dem Reibschuh (6) angebrachten Langloches aufweisen, wobei die Langlöcher von einem stationär an dem Reibschuhhalter befestigten Zapfen durchlaufen werden, wobei der parallel zur Rotationsachse des Stators (5) stehende Zapfen den Drehzapfen (14) des Reibschuhs (6) bildet.

5. Kupplung (1) nach Anspruch 4, **dadurch gekennzeichnet, dass** die Längsachse jedes Loches, das eine Führungsbahn bildet, mit dem durch den Drehzapfen (14) des entsprechenden Reibschuhs (6) verlaufenden Radius des Stators einen Winkel im Bereich von [60-85°] bildet.

6. Kupplung nach einem der Ansprüche 1 bis 5, **dadurch gekennzeichnet, dass** der Reibschuhhalter mit einer Mehrzahl von Aufnahmen (11 A, 11 B) für eine Feder (12) versehen ist, um die relative Position, insbesondere den Abstand, zwischen den auf einen Reibschuh (6) wirkenden Federn (12, 13) beliebig zu verändern, so dass insbesondere die Rückstellzeit bei dem Übergang von der ausgekuppelten Position in die eingekuppelte Position der Reibschuhe (6) variiert wird.

7. Kupplung (1) nach einem der Ansprüche 1 bis 6, **dadurch gekennzeichnet, dass** die auf einen Reibschuh (6) wirkenden Federn (12, 13) Druckfedern, vorzugsweise Schraubenfedern, sind, deren Achsen sich an dem Anlagepunkt des Reibschuhs an der Reibspur des zylindrischen Körpers in der ausgekuppelten Position des Reibschuhs (6) schneiden.

8. Kupplung (1) nach Anspruch 1, **dadurch gekennzeichnet, dass** die Flansche (7, 8) für jeden Reibschuh (6) mit mindestens zwei sich gegenüber liegenden Reihen von Nuten (10, 11) versehen sind, die jeweils zur Begrenzung der Führungsbahn einer Feder dienen, wobei sich die erste Reihe von Nuten (11) radial zwischen dem Grund der Kehle (16) und dem Rand der Flansche (7, 8) erstreckt und zur Aufnahme der eine Radialkraft bewirkenden Druckfeder (12) dient, die zwischen dem Grund der Kehle (16) und der Fläche des Reibschuhs (6), die der Fläche gegenüber liegt, die dafür vorgesehen ist, mit der Reibfläche (4) des Rotors (3) in Kontakt zu kommen, angeordnet ist, und die zweite Reihe von Nuten (10), die dafür vorgesehen ist, die Feder (13) aufzunehmen, die auf die Winkelposition des Reibschuhs (6) wirkt, an dem Rand der Flansche (7, 8) beginnt und sich in Richtung des Grundes der Kehle (16) durch den Drehzapfen (14) des Reibschuhs (6) erstreckt, wobei die Nuten (10) der zweiten Reihe von Nuten mit dem durch die Achse des Drehzapfens (14) verlaufenden Radius der Flansche (7, 8) einen Winkel α von vorzugsweise im Bereich von [60 - 75]° bilden.

9. Kupplung (1) nach einem der Ansprüche 1 bis 8, **dadurch gekennzeichnet, dass** der Reibschuhhalter mit mindestens drei Reibschuhen (6) und sechs Federn (12, 13) versehen ist, wobei jeder Reibschuh (6) die Form eines gekrümmten Fingers hat, der an seinen beiden Enden mit einer Aufweitung versehen ist, wobei die zwischen den Aufweitungen angeordnete Aussparung zur Aufnahme einer der Federn (6A, 6C) dient.

10. Rotationsschneidvorrichtung, vorzugsweise tragbar, wie ein Freischneider, wobei die Schneidvorrichtung zwischen einer Rotationsausgangsantriebswelle und einem Schneidelement eine Kupplung umfasst, **dadurch gekennzeichnet, dass** die Kupplung eine Kupplung nach einem der Ansprüche 1 bis 9 ist.
